Europäisches Patentamt

(19) European Patent Office

Office européen des brevets

(11) Publication number: **0 237 262 B1**

# EUROPEAN PATENT SPECIFICATION

(12)

(45) Date of publication of patent specification: **20.05.92**　　(51) Int. Cl.⁵: **A23L 3/18**, **A23B 7/00**, **A23L 3/22**, **B65B 55/14**

(21) Application number: **87301880.8**

(22) Date of filing: **04.03.87**

(54) **Method and apparatus for aseptically processing a food product.**

(30) Priority: **07.03.86 US 837512**

(43) Date of publication of application:
**16.09.87 Bulletin  87/38**

(45) Publication of the grant of the patent:
**20.05.92 Bulletin  92/21**

(84) Designated Contracting States:
**DE ES FR GB IT NL SE**

(56) References cited:
**FR-A- 2 098 817**
**FR-A- 2 451 718**
**GB-A- 529 834**
**US-A- 3 489 074**
**US-A- 3 586 510**

(73) Proprietor: **GRAHAM CORPORATION**
**20 Florence Avenue**
**Batavia New York 14020(US)**

(72) Inventor: **McFarlane, Donald Patrick**
**9540 Bernd Road**
**Pavilion New York 14625(US)**
Inventor: **Athey, Roderick Elwyn**
**8 Guildford Way**
**Pittsford New York 14534(US)**

(74) Representative: **Carpmael, John William Maurice et al**
**CARPMAELS & RANSFORD 43 Bloomsbury Square**
**London, WC1A 2RA(GB)**

## Description

Field of the Invention

This invention relates generally to food processing, and more specifically to a method and apparatus for continuously and gently aseptically processing a food product of the type comprising delicate food chunks of fruit, or vegetables or the like immersed in a liquid.

Description of the Prior Art

A food treating device with a helical pumping system is disclosed in U.S. Patent Nos. 3,489,074 and 3,586,510 which issued to D. F. Farkas et al. on January 13, 1970 and June 22, 1971, respectively. In U.S. Patent No. 3,489,074, the food treatment device comprises a helical feed pump formed from a continuous coil of tubing, and a treatment chamber for receiving the food from the feed pump and conveying it by means of a cleated belt into the inlet of a helical discharge pump, also formed from a continuous coil of tubing. U.S. Patent No. 3,586,510 discloses a food treatment device comprising a single continuous helical pump formed from a continuous coil of tubing wound on a drum and having a feed section, a holding section and a discharge section. In both devices, a slug of food material having a volume of 1/2 turn is fed into the feed pump for each revolution of the helical pump.

One problem encountered by the known food treatment devices is that food product can only be fed into the helical feed pump for 1/2 turn of the pump resulting in a maximum input ratio of food product to gas of 1 to 1. This seriously limits the rate of throughput of food product achieved by the food processing device resulting in reduced efficiency of food processing. Also, such known food treatment devices further suffer from the problem of transient conditions resulting, for example, from minor variations in the rate of liquid and food product being fed into the feed pump, and the trapping of bubbles of gas in the liquid entering the feed pump. These transients will cause instability of operation resulting, among other things, in a reduced throughput of food product, and an increased exposure time of food product on the dry inner tube wall surface resulting in product "burn on", forming a residue on the inner tube wall surface. The residue deleteriously affects the quality of the food product, the efficiency of the apparatus, and greatly increases "down time" required to clean the feed pump. Finally, systems described by known food treatment devices have no provision to ensure sterilisation of the gas used in the process. Since heat transfer into the gas is relatively poor compared to the food product, the gas fails to reach sterilisation temperature.

Summary of the Invention

According to a first aspect of the invention, there is provided a method of supplying a food product consisting of food chunks, for example of fruit or vegetables, immersed in a liquid, and a gas to the inlet of a rotating tubular helical feed pump comprising continuously introducing the food product into the inlet and characterised by simultaneously introducing the gas into the inlet to produce a volumetric ratio of food product to gas within the pump of greater than unity and to divide the food product in the pump into slugs such that each winding of the pump contains an upper gas-filled space.

According to a second aspect of the invention, there is provided a method of continuously aseptically processing a food product consisting of food chunks, for example of fruit or vegetables, immersed in a liquid comprising: supplying the food product and a first gas to the inlet of a first rotating tubular helical feed pump, mounted in a heating enclosure wherein the food product and gas are heated to a sterilisation temperature, utilising a method according to the first aspect of the invention; supplying heated food product from the outlet of the first helical feed pump and gas to a second feed member mounted in a holding enclosure wherein the food product and gas are maintained at the sterilisation temperature to sterilize the food product; supplying sterile food product and gas from the second feed member to a downstream separator which separates the gas and at least some of the liquid from the food product to form a sterile food product; and supplying the sterile food product from the separator to a container filling machine.

According to a third aspect of the invention, there is provided a tubular helical feed pump supplied by and including apparatus for supplying a food product consisting of food chunks, for example of fruit or vegetables, immersed in a liquid, and a gas to the inlet of the tubular helical feed pump comprising means for continuously introducing the food product into the inlet and characterised by means for simultaneously introducing the gas into the inlet and means for controlling the rate at which the gas is introduced.

According to a fourth aspect of the invention, there is provided processing apparatus for continuously aseptically processing a food product consisting of food chunks, for example of fruit or vegetables, immersed in a liquid comprising: a first helical feed pump according to the third aspect of the invention, wherein the gas is a first gas, for transporting the food product and means for heating the food product to a sterilization temperature therein; second means in product communication with the first helical feed pump for receiving the food product and transporting and holding the food product and gas at the sterilization temperature to sterilize the food product; third means in product communication with the second means for receiving, transporting and cooling the food product and gas; a downstream separator in product communication with the third means for separating the liquid and gas from the food product to form food chunks at the outlet thereof; and means for combining a portion of the separated liquid and the food chunks from the downstream separator to form an aseptic food product for feeding into containers.

A preferred embodiment of the invention provides processing apparatus according to the fourth aspect of the invention further comprising an upstream separator in product communication with the first helical feed pump for receiving the food product therefrom and separating the first gas from the food product, wherein the second means is in product communication with the upstream separator and includes means for introducing a second gas therein; wherein the means for heating the food product comprises a heating enclosure with the first helical feed pump rotatably mounted therein and means for introducing steam into the heating enclosure for raising the temperature of the food product in the heating enclosure to the sterilisation temperature; wherein the apparatus for introducing food product into the first helical feed pump comprises a hopper having an inlet for receiving food chunks and liquid to form a food product, the hopper having an outlet in food product communication with the inlet of the first helical feed pump; wherein the upstream separator comprises a first separator enclosure, a vent in the first separator enclosure for venting the first gas, and an angled sluiceway within the first separator enclosure for guiding food product from the inlet of the first separator enclosure to the outlet thereof; wherein the second means comprises a holding enclosure, and a second helical feed pump according to the third aspect of the invention rotatably mounted in the holding enclosure; wherein the third means comprises a cooling enclosure, a third helical feed pump rotatably mounted in the cooling enclosure and means for introducing a coolant into and out of the cooling enclosure for cooling the food product and second gas; and wherein the downstream separator comprises a second separator enclosure, a vent in the second separator enclosure for venting the second gas, a guideway comprising a plurality of parallel spaced apart wires mounted in the second separator enclosure for receiving food product from the third helical feed pump and guiding the food product towards the outlet of the second separator, and a liquid catch basin in the second separator enclosure below the guideway for receiving liquid from the food product through the spaced wires.

Preferably, the gas accumalator is cylindrical and eccentric with the pump.

A primary advantage or object of this invention is to solve the shortcomings or problems set forth in relation to prior known food treating devices. This object is achieved by, among other things, continuously feeding a food product comprising delicate food chunks of fruit, vegetable or the like immersed in a liquid in a predetermined ratio of food chunks to liquid directly into the first helical feed pump. This object is further achieved by providing each of the first and second helical feed pumps with a gas accumulator at the inlet thereof to allow the continuous introduction of gas into the accumulator during operation of the processing apparatus. Another contributing factor to solving the problems posed by prior known treatment devices is maintaining the enclosures and separators at a positive pressure to prevent non-sterile air or the like from entering therein through possible pin-hole leaks or the like in the outer walls thereof. Still another contributing factor is interposing a first separator between the first and second helical feed pumps to purge the food product of any non-sterile gas. By purging the non-sterile gas, the need is eliminated for the provision of means in the system to ensure sterilisation of the gas, which is known to be less heat conductive than the food product. Such provision would require increasing the gas heating time by increasing the number of coils in the heating feed pump, for example, in order to raise the temperature of the gas to the food product sterilization temperature. Having purged the nonsterile gas, a preheated, filtered, sterile gas is introduced into the inlet of the second helical feed pump to assure a food product output that is sterile and aseptic.

The invention and its advantages will become more apparent from the detailed description of the invention presented below.

Brief Description of the Drawings

In the detailed description of the invention presented below, reference is made to the accompanying drawings, in which:

Fig. 1 is a side elevational view, partly in diagrammatic form, of a preferred embodiment of the apparatus of this invention for aseptically processing a food product in accordance with the method of this invention;

Fig. 2 is an elevational end view of the apparatus of Fig. 1;

Fig. 3 is an enlarged side elevational view of the heating enclosure and first helical feed pump of the apparatus of Fig. 1 with portions thereof broken away and sectioned;

Fig. 4 is a section view taken substantially along line 4-4 of Fig. 3 showing the inlet end of the first helical feed pump, and the food product and gas interface in the first coil of the pump, if it were transparent;

Fig. 4A is an enlarged section view of the portion of Fig. 4 showing the gas accumulator, inlet pipe and gas pipe;

Figs. 5-9 are end views of the first coil of the first helical feed pump showing the gas and food product interface at various angles of rotation of the feed pump;

Fig. 10 is an enlarged section view of the first separator of the apparatus of Fig. 1;

Fig. 10A is a section view taken substantially along line 10A-10A of Fig. 10;

Fig. 11 is an enlarged section view of the holding enclosure and second helical feed pump of the apparatus of Fig. 1;

Fig. 12 is a section view taken substantially along line 12-12 of Fig. 11 showing the inlet end of the second helical feed pump and the food product and gas interface in the first coil, as if it were transparent;

Fig. 13 is an enlarged section view of the cooling enclosure and third helical feed pump of Fig. 1;

Fig. 14 is a section view taken substantially along line 14-14 of Fig. 13 showing the inlet end of the third helical feed pump and the food product and gas interface in the first coil, as if it were transparent;

Fig. 15 is an enlarged section view of the second separator of the apparatus of Fig. 1; and

Fig. 15A is a section view taken substantially along line 15A-15A of Fig. 15.

Detailed Description of the Invention

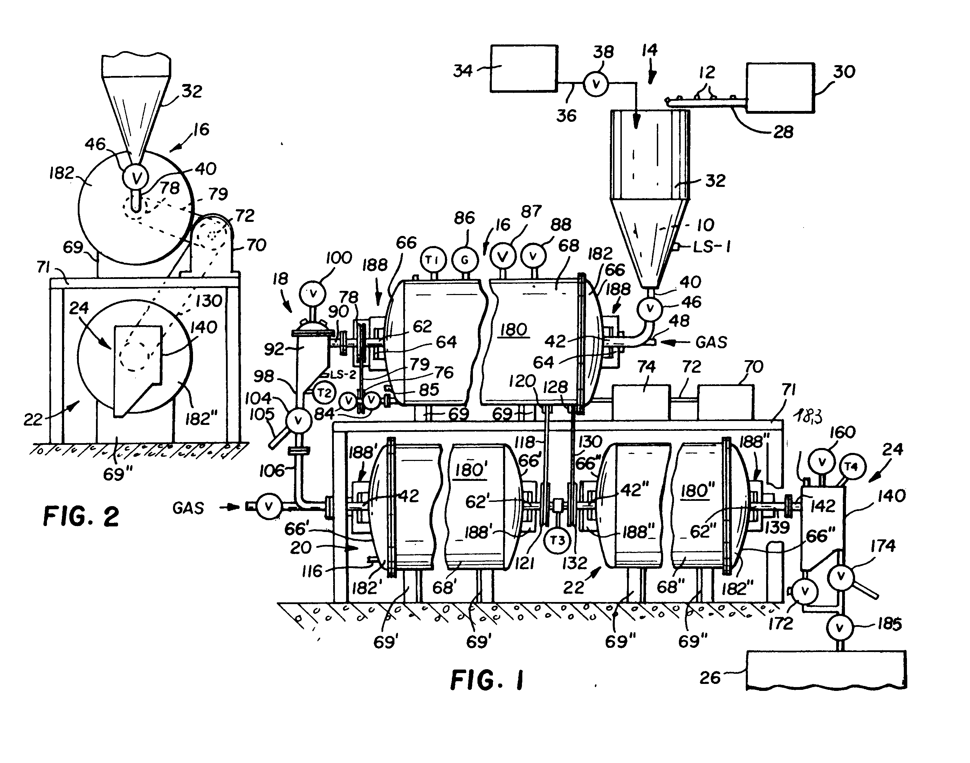

Referring now to Figs. 1 and 2 of the drawings, a preferred embodiment of the apparatus of this invention is shown for continuously and gently aseptically processing a food product 10. The food product comprises, for example, food chunks 12 of fruit, vegetables or the like, such as peaches, pineapple or potatoes, immersed in any suitable compatible liquid, such as, for example, fruit juice, vegetable juice or water.

One preferred embodiment of the aseptic food product processing apparatus, as best shown in Fig. 1, essentially comprises means 14 for feeding the food product 10 and a first nonsterile gas into a food product heating means 16 which heats the food product to a sterilization temperature of around 100° C. The heated food product 10 and first gas are fed into a first separator means 18 which separates the nonsterile gas from food product 10. The food product discharged from the first separator means 18 and a second sterile gas are fed into a holding means 20 where the food product 10 is held at the sterilization temperature for a sufficient time to sterilize the food product. The first gas is vented from tee first separator or recycled for further use. After sterilization, the food product 10 and second sterile gas are fed from the holding means 20 through a cooling means 22 for cooling the food product. The cooled aseptic food product 10 and second sterile gas are fed from the cooling means into a second separator means 24 where the sterile gas is vented to atmosphere or recycled for further use, and the aseptic food product 10 is separated into food chunks 12 and liquid. The aseptic food chunks 12 from the second separator means 24 are combined with a predetermined volume of the separated aseptic liquid in a predetermined ratio of food chunks 12 to liquid of three to one, for example, and fed to any suitable filling or canning machine 26.

In the event it is desired to use only one gas in the apparatus and to heat it along with the food product to its sterilization temperature in heating means 16, the first separator is eliminated from the system. The gas and food product are both fed together directly into holding means 20. No second gas is required in this embodiment, and there is no eccentric gas accumulator on holding feed pump 44′.

The food product feeding means 14 essentially comprises a conveyor 28 or the like for feeding food chunks 12 from a supply container 30 into any suitable mixing tank or hopper 32 in a controlled manner. A liquid is also supplied from a supply container 34 through a supply tube 36, preferably in spray form or alternatively in a tangential flow, into mixing hopper 32 to form the food product 10. The ratio in volume of food chunks 12 to liquid is controlled by any suitable means, such as a variable liquid control valve 38 or by speed control of conveyor 28, for example. A volumetric food product ratio of food chunks to liquid found to be suitable in the practice of this invention is 1-to-1, although other ratios of food chunks to liquid can be used. The mixing hopper 32 has a lower level switch LS-1 electrically connected to any suitable level detector and alarm to indicate to the operator when the food product level is too low. A similar upper level switch, not shown, may be provided to indicate when the food product level is too high.

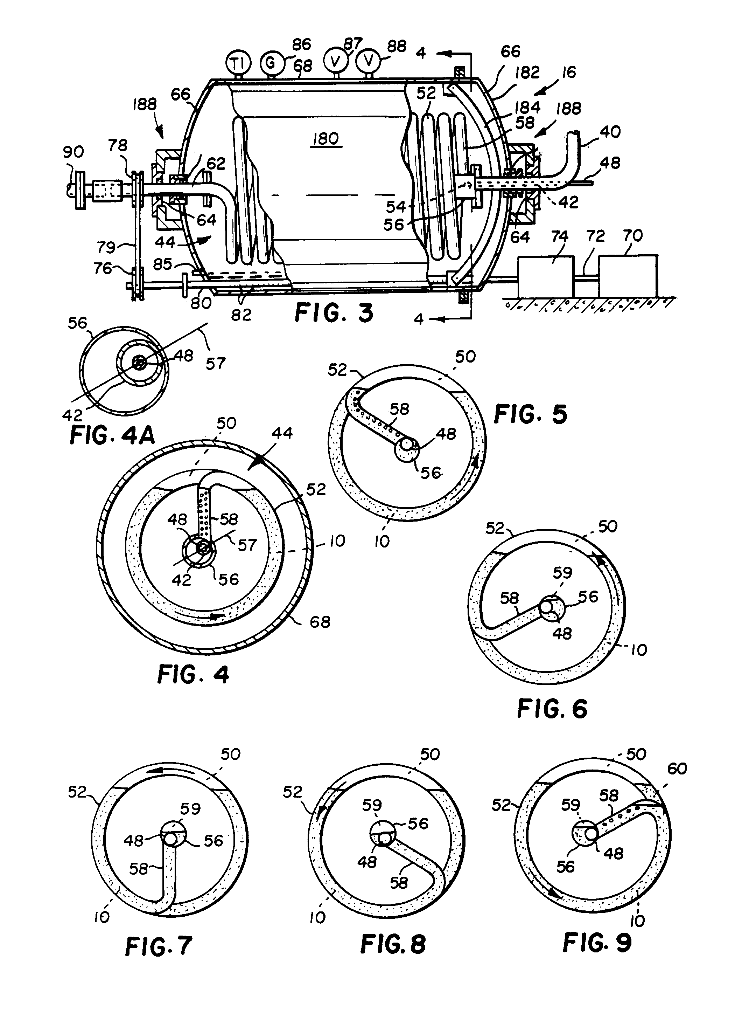

With reference to Fig. 3, the food product 10 is fed via feed tube 40 into inlet pipe 42 of a helical feed pump 44 of the food product heating means 16 upon opening of food product feed valve 46 in tube 40. A first suitable nonaseptic gas, such as air or nitrogen, is also fed from a pressurized gas source, not shown, into helical feed pump 44 by a small diameter pipe 48 extending through an elbow of tube 40 into and through the center of inlet pipe 42. The helical feed pump 44, and pipes 42, 48 are all coaxial.

With reference to Figs. 4-9, the purpose for introducing a gas into the inlet of helical feed pump 44 is to provide an upper space 50 in each coil 52 of pump 44 of a density substantially less than the density of the food product 10. By virtue of this difference in density, the food product 10 is transported at a controlled rate through coils 52 upon rotation of helical feed pump 44. Since the helical feed pump 44 *per se* is not new, and the theory and operation thereof is described in detail in U.S. Patent Nos. 3,489,074 and 3,586,510, no further description with regard to the known elements thereof is believed necessary.

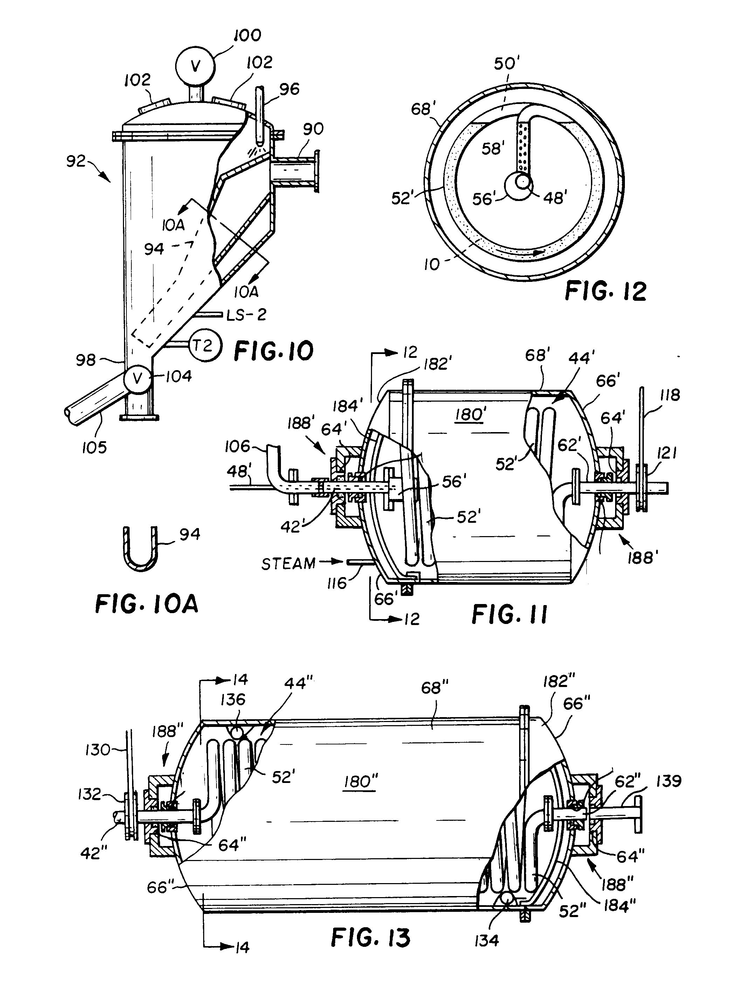

The outlet 54 of gas pipe 48 is positioned in a gas accumulator 56 having an axis that is offset from the axis of pipes 42, 48, as best seen in Figs. 4 and 4a. The purpose of gas accumulator 56 is to allow continuous introduction of gas into helical feed pump 44. Gas accumulator 56 has a flange at its open end connected to a flange at one end of pipe 42, and has an opening in the peripheral wall thereof connected to one end of a radially extending inlet leg 58 of first coil 52 of helical feed pump 44. For most efficient operation, gas accumulator 56 is positioned at an angle relative to inlet leg 58 so that a line 57 extending normally through the axes of tube 42 and gas accumulator 56 forms an angle of about 45° with inlet leg 58. With first coil 52 in the positions shown in Figs. 4 and 5, gas continuously introduced into pipe 48 enters accumulator 56 and passes through the food product 10 in the upwardly positioned inlet leg 58 into upper space 50 of the coil. As feed pump 44 rotates further through the positions shown in Figs. 6, 7 and 8, inlet leg 58 moves downwardly and is completely filled with food product 10 effectively preventing the less dense gas from passing therethrough, the gas instead rising and filling an upper space 59 within the accumulator instead of backing up into inlet pipe 42 and interfering with the continuous flow of food product 10 into the inlet pipe. When feed pump 44 rotates further to the position shown in Fig. 9, in which inlet leg 58 is inclined upwardly, the pressurized gas which is fed to accumulator 56 forces its way through food product 10 into inner leg 58 to form a gas pocket 60 at the upper end of inlet leg 58. For the remainder of such cycle of rotation, inlet leg 58 is positioned upwardly and the lighter gas passes therethrough into the upper coil space 50, as seen in Figs. 4 and 5. The continuous flow of gas into gas accumulator 56 through each cycle of operation is necessary to achieve a gas filled space whose volume, density and specific gravity can be more consistently controlled. It has been found that by properly controlling the continuous gas flow along with the continuous flow of food product 10 to achieve a volumetric ratio of food product to gas of about five to one, a satisfactory and controlled rate of food product transport through helical feed pump 44 can be achieved.

The inlet pipe 42 and an outlet pipe 62 of helical feed pump 44 are rotatably mounted in bearings 64 mounted in bearing supports 188 secured to end plates 66 of a cylindrical heating enclosure 68, as best seen in Fig. 3. The enclosure is mounted on legs 69 (Fig. 1) resting on a metal support frame 71, which in turn is mounted on a concrete slab. The feed pump 44 is rotatably driven by any suitable drive motor 70 (Figs. 1-3). The drive shaft 72 of motor 70 is drivingly coupled through a gear reducer 74 to feed pump 44 by a drive pulley 76 on drive shaft 72 driving a pulley 78 on pump outlet pipe 62 through a chain or belt connection 79.

The heating means for heating enclosure 68 comprises a closed end sparge pipe 80 (Fig. 3) extending into the enclosure adjacent the bottom thereof. The lower surface of pipe 80 has a plurality of radially extending holes 82 therethrough. A source of steam is connected through valves 84 (Fig. 1) to the open end of pipe 80 for introducing steam under pressure through pipe 80 and holes 82 therein for heating enclosure 68. Condensate from the inner periphery of enclosure 68 and external surface of helical feed pump 44 collects at the bottom of enclosure 68 to submerge pipe 80. A condensate outlet 85 in enclosure 68 is provided to control the condensate level in enclosure 68. The submerged pipe, arrangement of steam outlet holes 82 and condensate function to prevent the feed pump coils 52 from overheating by maintaining the steam in a saturated condition. Without this arrangement, the steam would become superheated resulting in deleterious " burn on" of the food product 10 on the inner surface of the coils. The condensing temperature within heating enclosure 68, which is measured by a temperature gauge T1 on top thereof, can be controlled by regulating the steam pressure or by the introduction of a noncondensing gas, such as air, for example. For condensing temperatures above 100° centigrade, steam alone under pressure is satisfactory. For condensing temperatures below 100°C, it is necessary to introduce air into the heating enclosure to control the condensing temperature while maintaining a pressure greater than atmospheric. A condensing temperature vent arrangement 87 is required to control the respective partial pressures of the steam and noncondensing gas (air) at temperatures below 100°C. The heating enclosure is further provided on top thereof with a normal pressure gauge 86 and steam relief valve 88, for example.

With reference to Figs. 1, 10 and 10A, outlet pipe 62 of helical feed pump 44 discharges food product 10 and gas through an inlet pipe 90 into a first separator 92. The outlet and inlet pipes 62, 90, respectively, have flanges, as best seen in Fig. 1, that are secured together by any suitable means, not shown. A sluiceway 94 of U-shaped cross-section in separator 92 has one end in alignment with and connected to inlet pipe 90, and is angled downwardly for guiding the food product toward the discharge end 98 of the separator. A food product level switch LS-2 is provided at the lower end of the separator to sense the level of the food product and to actuate an alarm, not shown, if the food product reaches that level. The pressurized gas emitted through inlet pipe 90 escapes from separator 92 through a vent 100 in the top wall of the separator. Windows 102 are provided in the top wall of separator 92 to allow the operator to observe the separator in operation. Separator 92 is further provided with a cleaning nozzle 96 at the upper end thereof through which liquid or steam may be directed for cleaning the separator.

With reference to Figs. 1, 11 and 12, the food product 10, mainly devoid of gas and at its sterlization temperature, is fed by gravity from separator discharge end 98 through a food product diverting valve 104, a feed tube 106 and inlet pipe 42' into a helical holding feed pump 44' of holding means 20. In describing holding means 20, parts similar to parts shown in previously described heating means 16 will be denoted by the same numerals primed. For example, holding feed pump 44' is substantially identical to heating feed pump 44 except for the number of coils 52' therein.

If the food product 10 discharged from separator 92 is below its sterilization temperature, a temperature switch T2 on the separator is closed actuating valve 104 for movement to its diverting position. In this position, the food product is diverted through a tube 105 into any suitable container, not shown, for return to the mixing tank 32. Also, a sterile or aseptic gas, which is filtered and preheated to be free of live bacteria, is fed into gas accumulator 56' of holding feed pump 44' by a gas pipe 48' coaxially mounted within inlet pipe 42'.

The inlet pipe 42' and outlet pipe 62' of holding feed pump 44' are rotatably mounted in bearings 64' mounted in bearing supports 188' secured to end plates 66' of a holding enclosure 68', as best seen in Fig. 11. The purpose of holding enclosure 68' is to maintain the food product 10 and aseptic gas at the sterilization temperature for a time sufficient to sterilize the food product. Since the heating and holding enclosures 68, 68', respectively, separator 92 and connections therebetween are well insulated, not shown, additional heat to holding enclosure 68' is not necessary. However, if additional heat is needed, steam can be introduced into holding enclosure 68' through a steam inlet pipe 116. The holding feed pump 44' is rotatably driven, as best seen in Fig. 1, by a belt or chain 118 trained over pulleys 120, 121 secured to drive shaft 72 and driven pipe 62', respectively.

With reference to Figs. 1, 13 and 14, the cooling means 22 will be described, in which parts thereof are similar to parts shown in the heating means 16 are denoted by the same numerals double primed. The sterilized food product 10 and gas are discharged from holding helical feed pump 44' into inlet tube 42" of cooling helical feed pump 44". The cooling helical feed pump is similar to heating and holding helical feed pumps 44, 44', respectively, with regard to coils 52, 52' except for the number thereof, and differs only in that it is not provided with a gas accumulator. The cooling helical feed pump 44" is rotatably mounted in bearings 64" mounted in bearing supports 188" secured to end plates 66" of cooling enclosure 68". The cooling feed pump 44" is rotatably driven by a drive pulley 128 on drive shaft 72 coupled by a chain 130 or belt to a driven pulley 132 on inlet tube 42". A coolant, such as cold water, for example, from any suitable source is fed into cooling enclosure 68" through an inlet pipe 134 near the bottom thereof, and the warmed water resulting from heat transfer between the coolant and hot coils 52" is discharged from cooling enclosure 68" through an outlet pipe 136 near the top thereof.

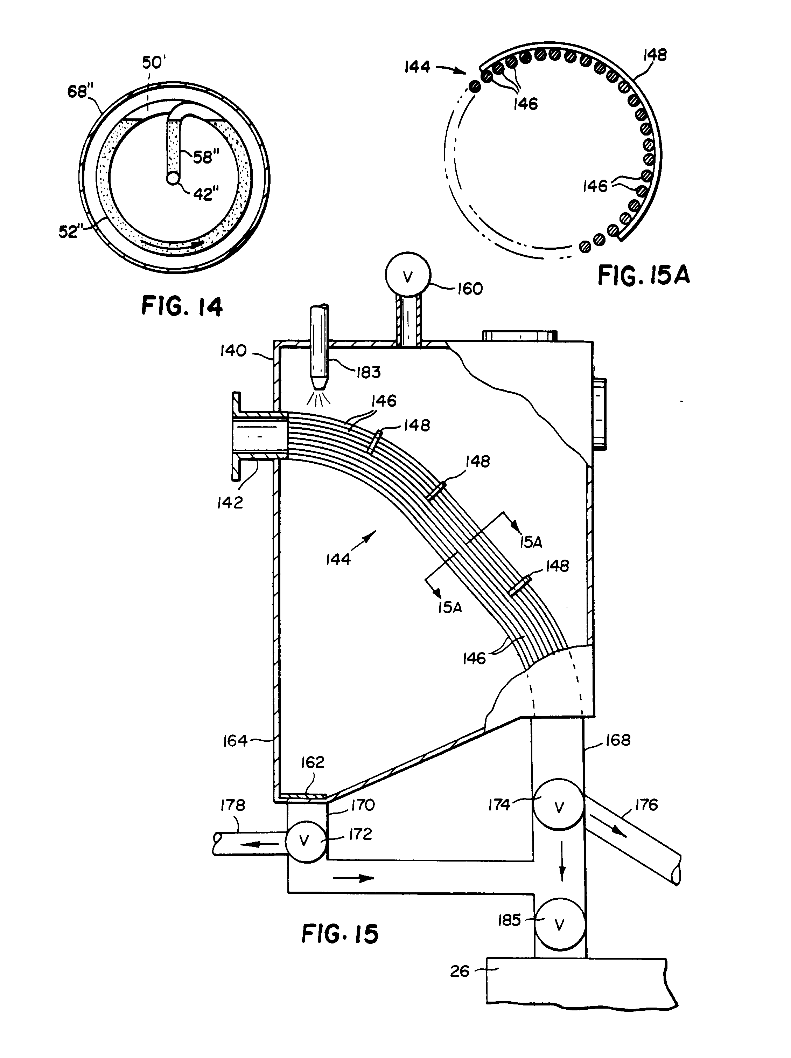

With reference to Figs. 1, 15 and 15A, the cooled aseptic food product 10 and aseptic gas are discharged from pump outlet pipe 62" into a second separator 140 through inlet pipes 139, 142. The separator 140 is designed to separate the gas and liquid from food product 10. The food product discharged from inlet pipe 142 is deposited into one end of a curved guideway 144 comprising a plurality of parallel, spaced apart wires 146. The wires are held in a circular configuration by spaced rings 148 secured to outer surfaces of the wires. The gas discharged from inlet pipe 142 and released from the food product 10 through spaced wires 146 is vented from separator 140 through a vent 160 in the top of the separator. The liquid passing through spaced wires 146 passes through a screen 162 at the bottom of a liquid catch basin 164 and through a drain pipe 170. The chunks 12 of fruit, vegetables or the like of the food product 10, now reduced in gas and liquid, are directed by guideway 144 into a product discharge outlet 168 of separator 140. The chunks 12 of fruit or the like pass through a temperature responsive diverting valve 174 similar to diverting valve 104 for diverting the food chunks below the sterilization temperature through tube 176 to any suitable container or the like, not shown, for return to food chunk supply container 30. Food chunks at the desired sterilization temperature pass through valve 174 and are joined with a predetermined volume of liquid, discharged from catch basin 164 through drain pipe 170 and controlled by any suitable control such as a valve 172, for passage through a valve 185 into any suitable container filling machine 26. By properly setting the liquid control, the desired volumetric ratio of food chunks to liquid, such as 3 to 1, for example, can be achieved. The unused liquid remaining in catch basin 164 can be pumped through a pipe 178 by any suitable pump, not shown, back into the liquid supply container 34. For cleaning purposes during shut down, the upper end of separator 140 can be provided with a spray nozzle 183 or the like.

Each of the heating, holding and cooling enclosures 68, 68' and 68", respectively, as best seen in Figs. 1 and 3, is constructed of a body 180, 180' and 180", and a head 182, 182' and 182" having mating flanges secured together by bolts, not shown, at the nondrive ends thereof to allow disassembly of the enclosure for access to the helical feed pump for cleaning and repair. An internal feed pump end support 184, 184' and 184" is mounted to each body at the open end thereof to support the feed pump upon removal of the head. Also, all of the inlet and outlet pipes joining the components of the aseptic food product processing apparatus, such as the heating, holding and cooling enclosures 68, 68' and 68", respectively, and the first and second separators 92, 140, respectively, are provided with mating flanges and gaskets not shown, secured together by bolts, bayonet connectors or the like, not shown.

## Claims

1. A method of supplying a food product (10) consisting of food chunks, for example of fruit or vegetables, immersed in a liquid, and a gas to the inlet (42) of a rotating tubular helical feed pump (44) comprising continuously introducing the food product into the inlet and characterised by simultaneously introducing the gas into the inlet to produce a volumetric ratio of food product to gas within the pump of greater than unity and to divide the food product in the pump into slugs such that each winding (52) of the pump contains an upper gas-filled space (50).

2. A method according to claim 1 wherein the ratio of food product to gas is about five.

3. A method of continuously aseptically processing a food product (10) consisting of food chunks, for example of fruit or vegetables, immersed in a liquid comprising: supplying the food product and a first gas to the inlet (42) of a first rotating tubular helical feed pump (44), mounted in a heating enclosure (68) wherein the food product and gas are heated to a sterilisation temperature, utilising a method according to claim 1 or claim 2; supplying heated food product from the outlet of the first helical feed pump and gas to a second feed member (44') mounted in a holding enclosure (68') wherein the food product and gas are maintained at the sterilisation temperature to sterilise the food product; supplying sterile food product and gas from the second feed member to a downstream separator (24) which separates the gas and at least some of the liquid from the food product to form a sterile food product; and supplying the sterile food product from the separator to a container filling machine (26).

4. A method according to claim 3 including supplying the sterile food product and gas to the inlet of a rotating tubular helical feed pump (44") mounted in a cooling enclosure (68") wherein the food product and gas are cooled prior to supplying the cooled sterile food product and gas to the downstream separator.

5. A method according to claim 4 wherein the heating, holding and cooling enclosures are all maintained at a pressure above atmospheric.

6. A method according to any one of claims 3-5 wherein the second feed member comprises a second rotating tubular helical feed pump.

7. A method according to any one of claims 3-6 wherein the first gas is supplied from the outlet of the first helical feed pump to the second feed member.

8. A method according to claim 6 including supplying heated food product and first gas from the outlet of the first helical feed pump to an upstream separator (18) which separates the first gas from the food product prior to supplying the food product and a second gas to the inlet of the second helical feed pump.

9. A method according to claim 8 wherein the downstream separator separates the second gas and liquid from the food chunks and wherein the sterile food product is combined with a portion of the liquid separated therefrom prior to supplying it to the container filling machine.

10. A method according to claim 8 or claim 9 wherein the upstream and downstream separators are maintained at a pressure above atmospheric.

11. A method according to any one of claims 8-10 wherein the first gas is a sterile or non-sterile gas and the second gas is a sterile gas.

12. A method according to claim 11 wherein the first or second gas, or both, is a filtered, preheated sterile gas free from live bacteria.

13. A method according to any one of claims 8-12 wherein the food product and second gas are supplied to the inlet of the second helical feed pump utilising a method according to claim 1 or claim 2.

14. A tubular helical feed pump (44) supplied by and including apparatus for supplying a food product (10) consisting of food chunks, for example of fruit or vegetables, immersed in a liquid, and a gas to the inlet of the tubular helical feed pump (44) comprising means (14) for continuously introducing the food product into the inlet and characterised by means (48) for simultaneously introducing the gas into the inlet and means for controlling the rate at which the gas is introduced.

15. A tubular helical feed pump according to claim 14 wherein the means for controlling the rate at which the gas is introduced is adapted so as, in use, to produce a volumetric ratio of food product to gas within the pump of greater than unity and to divide the food product within the pump into slugs such that each winding (52) of the pump contains an upper gas-filled space (50).

16. A helical feed pump according to claim 15 wherein the ratio of food product to gas is about five.

17. A helical feed pump according to any one of claims 14-16 provided at its inlet (42) with a gas accumulator (56) for receiving the gas.

18. A helical feed pump according to claim 17 wherein the gas accumulator is cylindrical and eccentric with the pump.

19. A helical feed pump according to claim 18 provided with a radially extended inlet leg (58) making an angle of about 45° with a line (57) normal to, and intersecting, both the gas accumulator and pump axes.

20. Processing apparatus for continuously aseptically processing a food product (10) consisting of food chunks, for example of fruit or vegetables, immersed in a liquid comprising: a first helical feed pump (44) according to any one of claims 14-19, for transporting the food product and the gas, wherein the gas is a first gas, and means for heating the food product to a sterilisation temperature therein; second means (44') in product communication with the first helical feed pump for receiving the food product and transporting and holding the food product at the sterilisation temperature to sterilise the food product; third means (44") in product communication with the second means for receiving, transporting and cooling the food product; a downstream separator (24) in product communication with the third means for separating the liquid and gas from the food product to form food chunks at the outlet thereof; and means (172, 174, 185) for combining a portion of the separated liquid and the food chunks from the downstream separator to form an aseptic food product for feeding into containers.

21. Processing apparatus according to claim 20 further comprising an upstream separator (18) in product communication with the first helical feed pump for receiving the food product therefrom and separating the first gas from the food product and wherein the second means is in product communication with the upstream separator and includes means for introducing a second gas therein.

22. Processing apparatus according to claim 21 wherein the means for heating the food product comprises a heating enclosure (68) with the first helical feed pump rotatably mounted therein and means (116) for introducing steam into the heating enclosure for raising the temperature of the food product in the heating enclosure to the sterilisation temperature; wherein the apparatus for introducing food product into the first helical feed pump comprises a hopper (32) having an inlet for receiving food chunks and liquid to form a food product, the hopper having an outlet in food product communication with the inlet of the first helical feed pump; wherein the upstream separator comprises a first separator enclosure (92), a vent (100) in the first separator enclosure for venting the first gas, and an angled sluiceway (94) within the first separator enclosure for guiding food product from the inlet (90) of the first separator enclosure to the outlet (98) thereof; wherein the second means comprises a holding enclosure (68'), and a second helical feed pump (44') according to any one of claims 14-19 rotatably mounted in the holding enclosure; wherein the third means comprises a cooling enclosure (68"), a third helical feed pump (44") rotatably mounted in the cooling enclosure and means (134) for introducing a coolant into and out of the cooling enclosure for cooling the food product and second gas; and wherein the downstream separator comprises a second separator enclosure (140), a vent (160) in the second separator enclosure for venting the second gas, a guideway (144) comprising a plurality of parallel spaced apart wires (146) mounted in the second separator enclosure for receiving food product from the third helical feed pump and guiding the food product towards the outlet (168) of the second separator, and a liquid catch basin (164) in the second separator enclosure below the guideway for receiving liquid from the food product through the spaced wires.

## Revendications

1. Un procédé de fourniture d'un produit alimentaire (10) constitué de morceaux d'aliments, par exemple de fruits ou de légumes, immergés dans un liquide, et un gaz à l'entrée (42) d'une pompe d'alimentation à hélice, tubulaire, entraînée en rotation (44) consistant à introduire en continu le produit alimentaire dans l'entrée et caractérisé en ce que l'on introduit simultanément le gaz à l'intérieur de l'entrée pour produire un rapport volumétrique du produit alimentaire au gaz dans la pompe supérieur à l'unité et à diviser le produit alimentaire à l'intérieur de la pompe en barres ou lingots de telle sorte que chaque spire (52) de la pompe contienne un espace supérieur rempli de gaz (50).

2. Un procédé selon la revendication 1, dans lequel le rapport du produit alimentaire au gaz est d'environ 5.

3. Un procédé de traitement aseptique en continu d'un produit alimentaire (10) constitué de morceaux d'aliments, par exemple de fruits ou de légumes, immergés dans un liquide consistant : à fournir le produit alimentaire et un premier gaz à l'entrée (42) d'une première pompe d'alimentation à hélice, tubulaire, entraînée en rotation (44), montée dans une enceinte de chauffage (68) dans lequel le produit alimentaire et le gaz sont chauffés à une température de stérilisation, à utiliser un procédé selon la revendication 1 ou 2 ; à fournir le produit alimentaire chauffé à partir de la sortie de la première pompe d'alimentation à hélice et du gaz à un second élément d'alimentation (44') monté dans une enceinte de support (68') dans laquelle le produit alimentaire et le gaz sont maintenus à la température de stérilisation pour stériliser le produit alimentaire ; à fournir le produit alimentaire stérile et le gaz à partir du second élément d'alimentation vers un séparateur aval (24) qui sépare le gaz et au moins une certaine quantité de liquide à partir du produit alimentaire pour former un produit alimentaire stérile ; et à fournir le produit alimentaire stérile à partir du séparateur vers une machine de remplissage de récipients (26).

4. Un procédé selon la revendication 3, consistant à fournir le produit alimentaire stérile et le gaz à l'entrée d'une pompe d'alimentation à hélice, tubulaire, entraînée en rotation (44") montée dans une enceinte de refroidissement (68") dans laquelle le produit alimentaire et le gaz sont refroidis avant de fournir le produit alimentaire refroidi stérile et le gaz au séparateur aval.

5. Un procédé selon la revendication 4, dans lequel les enceintes de chauffage, de support et de refroidissement sont toutes maintenues à une pression au-dessus de la pression atmosphérique.

6. Un procédé selon l'une quelconque des revendications 3-5 dans lequel le second élément d'alimentation consiste en une seconde pompe d'alimentation à hélice, tubulaire, entraînée en rotation.

7. Un procédé selon l'une quelconque des revendications 3-6 dans lequel le premier gaz est fourni à partir de la sortie de la première pompe d'alimentation hélicoïdale au second élément d'alimentation.

8. Un procédé selon la revendication 6, consistant à fournir le produit alimentaire chauffé et le premier gaz à la sortie de la première pompe d'alimentation à hélice vers un séparateur amont (18) qui sépare le premier gaz du produit alimentaire avant de fournir le produit alimentaire et un second gaz à l'entrée de la seconde pompe d'alimentation à hélice.

9. Un procédé selon la revendication 8, dans lequel le séparateur aval sépare le second gaz et le liquide à partir des morceaux d'aliments et dans lequel le produit alimentaire stérile est combiné avec une partie du liquide séparé de celui-ci avant de le fournir à une machine de remplissage de récipients.

10. Un procédé selon la revendication 8 ou la revendication 9, dans lequel les séparateurs amont et aval sont maintenus à une pression située au-dessus de la pression atmosphérique.

11. Un procédé selon l'une quelconque des revendications 8-10, dans lequel le premier gaz est un gaz stérile ou non stérile et le second gaz est un gaz stérile.

12. Un procédé selon la revendication 11, dans lequel le premier ou le second gaz, ou les deux gaz, sont des gaz stériles, filtrés, préchauffés, exempts de bactéries vivantes.

13. Un procédé selon l'une quelconque des revendications 8-12, dans lequel le produit alimentaire et le second gaz sont fournis à l'entrée de la seconde pompe d'alimentation à hélice en utilisant un procédé conforme à la revendication 1 ou à la revendication 2.

14. Une pompe d'alimentation à hélice, tubulaire (44) alimentée par et comportant un dispositif pour fournir un produit alimentaire (10) constitué de morceaux d'aliments, par exemple de fruits ou de légumes, immergés dans un liquide, et un gaz à l'entrée de la pompe d'alimentation à hélice, tubulaire (44) comportant un moyen (14) pour introduire en continu le produit alimentaire dans l'entrée et caractérisée en ce qu'on prévoit un moyen (48) pour introduire simultanément le gaz dans l'entrée et un moyen pour régler le débit auquel le gaz est introduit.

15. Une pompe d'alimentation à hélice, tubulaire selon la revendication 14, dans laquelle le moyen pour régler le débit auquel le gaz est introduit est adapté pour assurer, en service, un rapport volumétrique du produit alimentaire au gaz, dans la pompe, supérieur à l'unité et diviser le produit alimentaire dans la pompe en lingots ou barres tels que chaque spire (52) de la pompe renferme un espace supérieur rempli de gaz (50).

16. Une pompe d'alimentation à hélice selon la revendication 15, dans laquelle le rapport du produit alimentaire au gaz est de 5 environ.

17. Une pompe d'alimentation à hélice selon l'une quelconque des revendications 14-16, munie à son entrée (42) d'un accumulateur de gaz (56) pour recevoir le gaz.

18. Une pompe d'alimentation à hélice selon la revendication 17, dans laquelle l'accumulateur de gaz est cylindrique et décentré par rapport à la pompe.

19. Une pompe d'alimentation à hélice selon la revendication 18, munie d'un jambage d'entrée s'étendant radialement (58) faisant un angle d'environ 45° par rapport à la ligne (57) perpendiculaire à et coupant à la fois les axes de l'accumulateur de gaz de la pompe.

20. Dispositif de traitement pour le traitement aseptique en continu d'un produit alimentaire (10) constitué de morceaux d'aliments, par exemple de fruits ou de légumes, immergés dans un liquide comportant : une première pompe d'alimentation à hélice (44) selon l'une quelconque des revendications 14-19 pour transporter le produit alimentaire et le gaz, dans lequel le gaz est un premier gaz, et un moyen pour chauffer le produit alimentaire à une température de stérilisation ; un second moyen (44') en communication avec la première pompe d'alimentation à hélice pour recevoir le produit alimentaire et le transporter et le maintenir à la température de stérilisation pour stériliser le produit alimentaire ; un troisième moyen (44") en communication avec le second moyen pour recevoir, transporter et refroidir le produit alimentaire ; un séparateur aval (24) en communication avec le troisième moyen pour séparer le liquide et le gaz à partir du produit alimentaire pour former des morceaux d'aliments à la sortie de celui-ci ; et des moyens (172, 174, 185) pour combiner une partie du liquide séparé et les morceaux d'aliments à partir du séparateur aval pour former un produit alimentaire aseptique pour remplir des récipients.

21. Dispositif de traitement selon la revendication 20, comportant en outre un séparateur amont (18) en communication avec la première pompe d'alimentation à hélice pour recevoir le produit alimentaire et séparer le premier gaz du produit alimentaire et dans lequel le second moyen est en communication avec le séparateur amont et comporte un moyen pour introduire un second gaz.

22. Dispositif de traitement selon la revendication 21, dans lequel le moyen pour chauffer le produit alimentaire comporte une enceinte de chauffage (68) avec la première pompe d'alimentation à hélice montée à rotation dans celui-ci et un moyen (116) pour introduire de la vapeur dans l'enceinte de chauffage et pour élever la température du produit alimentaire dans l'enceinte de chauffage à la température de stérilisation ; dans lequel le dispositif pour introduire le produit alimentaire dans la première pompe d'alimentation à hélice comporte une trémie (32) ayant une entrée pour recevoir les morceaux d'aliments et le liquide pour former un produit alimentaire, la trémie ayant une sortie communiquant avec l'entrée de la première pompe d'alimentation à hélice ; dans lequel le séparateur amont comporte une première enceinte de séparation (92), un orifice de purge (100) dans la première enceinte de séparation pour évacuer le premier gaz et un conduit incliné (94) dans la première enceinte de séparation pour guider le produit alimentaire à partir de l'entrée (90) de la première enceinte de séparation vers la sortie (98) de celle-ci ; dans lequel le second moyen comporte une enceinte de support (68') et une seconde pompe d'alimentation à hélice (44') conforme à l'une quelconque des revendications 14-19 montée à rotation dans l'enceinte de support ; dans lequel le troisième moyen comporte une enceinte de refroidissement (68"), une troisième pompe d'alimentation à hélice (44") montée à rotation dans l'enceinte de refroidissement et un moyen (134) pour introduire un agent de refroidissement dans et hors l'enceinte de refroidissement pour refroidir le produit alimentaire et le second gaz ; et dans lequel le séparateur aval comprend une seconde enceinte de séparation (140), un orifice de purge (160) dans la seconde enceinte de séparation pour évacuer le second gaz, un conduit (144) comportant une pluralité de fils métalliques espacés et parallèles (146) montés dans la seconde enceinte de séparation pour recevoir le produit alimentaire à partir de la troisième pompe d'alimentation à hélice et guider le produit alimentaire vers la sortie (168) du second séparateur et un bassin de recueil du liquide (164) dans la seconde enceinte de séparation en dessous du conduit pour recevoir le liquide à partir du produit alimentaire à travers les fils métalliques espacés.

**Patentansprüche**

1. Verfahren zum Zuführen eines Nahrungsmittelproduktes (10), das aus in einer Flüssigkeit eingetauchten Nahrungsmittelstücken, beispielsweise Früchten oder Gemüse bzw. Pflanzen, besteht, und eines Gases zu dem Einlaß (42) einer drehenden, rohrförmigen, schraubenförmigen Förderpumpe (44), wobei das Nahrungsmittelprodukt kontinuierlich in den Einlaß eingeführt wird, dadurch gekennzeichnet, daß das Gas gleichzeitig in den Einlaß eingeführt wird, um innerhalb der Pumpe ein volumetrisches Verhältnis von Nahrungsmittelprodukt zu Gas zu erzeugen, das größer als 1 ist, und um das Nahrungsmittelprodukt in der Pumpe in Abschnitte zu unterteilen, derart, daß jede Windung (52) der Pumpe einen oberen gasgefüllten Raum (50) enthält.

2. Verfahren nach Anspruch 1, dadurch gekennzeichnet, daß das Verhältnis von Nahrungsmittelprodukt zu Gas ungefähr 5 beträgt.

3. Verfahren zum kontinuierlichen aseptischen Verarbeiten eines Nahrungsmittelprodukts (10), das aus in einer Flüssigkeit eingetauchten Nahrungsmittelstücken, beispielsweise Früchten oder Gemüsen, besteht, bei dem das Nahrungsmittelprodukt und ein erstes Gas unter Einsatz des Verfahrens gemäß Anspruch 1 oder 2 dem Einlaß (42) einer ersten drehenden, rohrförmigen, schraubenförmigen Förderpumpe (44) zugeführt wird, die in einer Heiz-Umhüllung (68) angeordnet ist, in der das Nahrungsmittelprodukt und das Gas auf eine Sterilisationstemperatur aufgeheizt werden; bei dem das erhitzte Nahrungsmittelprodukt vom Auslaß der ersten schraubenförmigen Förderpumpe und Gas zu einem zweiten Förderorgan (44') zugeführt werden, das in einer Halte-Umhüllung (68') angebracht ist, in der das Nahrungsmittelprodukt und das Gas auf der Sterilisationstemperatur für die Sterilisierung des Nahrungsmittelproduktes gehalten werden; bei dem das sterile Nahrungsmittelprodukt und Gas von dem zweiten Förderorgan zu einem stromab befindlichen Separator (24) zugeführt werden, der das Gas und zumindest einen Teil der Flüssigkeit vom Nahrungsmittelprodukt zur Bildung eines sterilen Nahrungsmittelprodukts separiert; und bei dem das sterile Nahrungsmittelprodukt vom Separator zu einer Behälter-Füllmaschine (26) zugeführt wird.

4. Verfahren nach Anspruch 3, bei dem das sterile Nahrungsmittelprodukt und Gas zum Einlaß einer drehenden rohrförmigen, schraubenförmigen Förderpumpe (44") zugeführt werden, die in einer Kühl-Umhüllung (68") angebracht ist, in der das Nahrungsmittelprodukt und Gas gekühlt werden, bevor das gekühlte sterile Nahrungsmittelprodukt und Gas zum stromab befindlichen Separator zugeführt werden.

5. Verfahren nach Anspruch 4, dadurch gekennzeichnet, daß alle Heiz-, Halte- und Kühl- Umhüllungen bei einem Druck oberhalb des Atmosphärendrucks gehalten werden.

6. Verfahren nach einem der Ansprüche 3 bis 5, dadurch gekennzeichnet, daß das zweite Förderorgan eine zweite drehende rohrförmige, schraubenförmige Förderpumpe enthält.

7. Verfahren nach einem der Ansprüche 3 - 6, dadurch gekennzeichnet, daß das erste Gas vom Auslaß der ersten schraubenförmigen Förderpumpe zum zweiten Förderorgan zugeführt wird.

8. Verfahren nach Anspruch 6, dadurch gekennzeichnet, daß das aufgeheizte Nahrungsmittelprodukt und das erste Gas vom Auslaß der ersten schraubenförmigen Förderpumpe zu einem stromauf befindlichen Separator (18) zugeführt werden, der das erste Gas vom Nahrungmittelprodukt trennt, bevor das Nahrungsmittelprodukt und ein zweites Gas zum Einlaß der zweiten schraubenförmigen Förderpumpe zugeführt werden.

9. Verfahren nach Anspruch 8, dadurch gekennzeichnet, daß der stromab befindliche Separator das zweite Gas und Flüssigkeit von den Nahrungsmittelstücken trennt, und daß das sterile Nahrungsmittelprodukt vor seiner Zuführung zur Behälter-Füllmaschine mit einem Teil der von ihm abgeschiedenen Flüssigkeit zusammengefasst wird.

10. Verfahren nach Anspruch 8 oder 9, dadurch gekennzeichnet, daß der stromauf befindliche Separator und der stromab befindliche Separator bei einem Druck oberhalb Atmosphärendruck gehalten werden.

11. Verfahren nach einem der Ansprüche 8 bis 10, dadurch gekennzeichnet, daß das erste Gas ein steriles oder nichtsteriles Gas und das zweite Gas ein steriles Gas ist.

12. Verfahren nach Anspruch 11, dadurch gekennzeichent, daß das erste und/oder das zweite Gas ein gefiltertes, vorgeheiztes steriles Gas ist, das frei von lebenden Bakterien ist.

13. Verfahren nach einem der Ansprüche 8 bis 12, dadurch gekennzeichet, daß das Nahrungsmittelprodukt und das zweite Gas zum Einlaß der zweiten schraubenförmigen Förderpumpe unter Anwendung des Verfahrens gemäß Anspruch 1 oder 2 zugeführt werden.

14. Rohrförmige, schraubenförmige Förderpumpe (44), die eine Vorrichtung zum Zuführen eines Nahrungsmittelprodukts (10), das aus in einer Flüssigkeit eingetauchten Nahrungsmittelstükken, beispielsweise Früchten oder Gemüsen, besteht, und eines Gases zum Einlaß der rohrförmigen, schraubenförmigen Förderpumpe (44) enthält und durch diese gespeist wird, mit einer Einrichtung (14) zum kontinuierlichen Einführen des Nahrungsmittelprodukts in den Einlaß, gekennzeichnet durch eine Einrichtung (48) zum gleichzeitigen Zuführen des Gases in den Einlaß und eine Vorrichtung zum Steuern der Rate, mit der das Gas eingeführt wird.

15. Förderpumpe nach Anspruch 14, dadurch gekennzeichnet, daß die Vorrichtung zum Steuern der Rate, mit der das Gas eingeführt wird, derart ausgelegt ist, daß sie bei ihrem Einsatz ein volumetrisches Verhältnis von Nahrungsmittelprodukt zu Gas innerhalb der Pumpe erzeugt, das größer als 1 ist, und das Nahrungsmittelprodukt in der Pumpe in Abschnitte unterteilt, derart, daß jede Windung (52) der Pumpe einen oberen gasgefüllten Raum (50) enthält.

16. Förderpumpe nach Anspruch 15, dadurch gekennzeichnet, daß das Verhältnis von Nahrungsmittelprodukt zu Gas ungefähr 5 beträgt.

17. Förderpumpe nach einem der Ansprüche 14 bis 16, dadurch gekennzeichnet, daß ihr Einlaß (42) mit einem Gassammler (56) zum Aufnehmen des Gases versehen ist.

**18.** Förderpumpe nach Anspruch 17, dadurch gekennzeichnet, daß der Gassammler zylindrisch und exzentrisch zur Pumpe angeordnet ist.

**19.** Förderpumpe nach Anspruch 18, gekennzeichnet durch einen radial erstreckten Einlaßschenkel (58), der einen Winkel von ungefähr 45° mit einer Linie (57) einschließt, die senkrecht sowohl zum Gassammler als auch zu den Pumpenachsen verläuft und diese schneidet.

**20.** Behandlungsvorrichtung zum kontinuierlichen aseptischen Behandeln eines Nahrungsmittelproduktes (10), das aus in einer Flüssigkeit eingetauchten Nahrungsmittelstücken, beispielsweise Früchten oder Gemüsen besteht, mit einer ersten schraubenförmigen Förderpumpe (44) gemäß einem der Ansprüche 14 bis 19 zum Transportieren des Nahrungsmittelproduktes und des Gases, das ein erstes Gas ist, und einer Einrichtung zum Aufheizen des Nahrungsmittelproduktes in der Förderpumpe auf eine Sterilisationstemperatur; mit einer zweiten Einrichtung (44'), die in Produktverbindung mit der ersten schraubenförmigen Förderpumpe steht und zum Aufnehmen des Nahrungsmittelproduktes sowie zum Transportieren und Halten des Nahrungsmittelprodukts bei der Sterilisationstemperatur für die Sterilisierung des Nahrungsmittelproduktes dient; mit einer dritten Einrichtung (44"), die in Produktverbindung mit der zweiten Einrichtung steht und zum Aufnehmen, Transportieren und Kühlen des Nahrungsmittelproduktes dient; mit einem stromab angeordneten Separator (24), der in Produktverbindung mit der dritten Einrichtung steht und zum Abscheiden der Flüssigkeit und des Gases vom Nahrungsmittelprodukt für die Bildung von Nahrungsmittelstücken an seinem Auslaß dient; und mit einer Einrichtung (172, 174, 185) zum Zusammenfassen eines Teils der abgeschiedenen Flüssigkeit und der Nahrungsmittelstücke aus dem stromab angeordneten Separator, um ein aseptisches Nahrungsmittelprodukt für die Einführung in Behälter zu bilden.

**21.** Behandlungsvorrichtung nach Anspruch 20, gekennzeichnet durch einen stomauf angeordneten Separator (18), der in Produktverbindung mit der ersten schraubenförmigen Förderpumpe steht und zum Aufnehmen des Nahrungsmittelproduktes aus der ersten Förderpumpe sowie zum Abscheiden des ersten Gases vom Nahrungsmittelprodukt dient, wobei die zweite Einrichtung in Produktverbindung mit dem stromauf angeordneten Separator steht und eine Einrichtung zum Einführen eines zweiten Gases in diesen aufweist.

**22.** Behandlungsvorrichtung nach Anspruch 21, dadurch gekennzeichnet, daß die Einrichtung zum Aufheizen des Nahrungsmittelproduktes eine Heiz-Umhüllung (68), in der die erste schraubenförmige Förderpumpe drehbar angebracht ist, und eine Einrichtung (116) zum Einführen von Dampf in die Heiz-Umhüllung zum Anheben der Temperatur des Nahrungsmittelproduktes in der Heiz-Umhüllung auf die Sterilisations-Temperatur umfasst; daß die Einrichtung zum Einführen des Nahrungsmittelproduktes in die erste schraubenförmige Förderpumpe einen Behälter (32) mit einem Einlaß für die Aufnahme von Nahrungsmittelstücken und Flüssigkeit für die Bildung des Nahrungsmittelproduktes aufweist, wobei der Behälter einen Auslaß umfasst, der in Nahrungsmittelproduktverbindung mit dem Einlaß der ersten schraubenförmigen Förderpumpe steht; daß der stromauf befindliche Separator eine erste Separator-Umhüllung (92), eine Entlüftung (100) in der ersten Separator-Umhüllung für die Entlüftung des ersten Gases und einen winkeligen Schleusengang (94) innerhalb der ersten Separator-Umhüllung für die Führung des Nahrungsmittelproduktes vom Einlaß (90) der ersten Separator-Umhüllung zu deren Auslaß (98) aufweist; daß die zweite Einrichtung eine Halte-Umhüllung (68') und eine drehbar in der Halte-Umhüllung angebrachte zweite schraubenförmige Förderpumpe (44') gemäß einem der Ansprüche 14 bis 19 aufweist; daß die dritte Einrichtung eine Kühl-Umhüllung (68"), eine drehbar in der Kühl-Umhüllung angebrachte dritte schraubenförmige Förderpumpe (44") sowie eine Einrichtung (134) zum Einführen eines Kühlmittels in die Kühl-Umhüllung für die Kühlung des Nahrungsmittelproduktes und des zweiten Gases sowie zum Herausführen des Kühlmittels aus der Kühl-Umhüllung aufweist; und daß der stromab angeordnete Separator eine zweite Separator-Umhüllung (140), eine Entlüftung (160) in der zweiten Separator-Umhüllung für die Entlüftung des zweiten Gases, eine Vielzahl von in der zweiten Separator-Umhüllung angebrachten parallelen, beabstandeten Drähten (146) aufweisende Führung (144) zum Empfangen des Nahrungsmittelproduktes von der dritten schraubenförmigen Förderpumpe und zum Führen des Nahrungsmittelproduktes zum Auslaß (168) des zweiten Separators, sowie ein in der zweiten Separator-Umhüllung unterhalb der Führung angebrachtes Flüssigkeitsauffangbek-

ken (164) zum Aufnehmen von Flüssigkeit aus dem Nahrungsmittelprodukt über die beabstandeten Drähte umfasst.

FIG. I

FIG. 2

FIG. 3

FIG. 4A

FIG. 4

FIG. 5

FIG. 6

FIG. 7

FIG. 8

FIG. 9

FIG. 10

FIG. 10A

FIG. 12

FIG. 11

FIG. 13

17

FIG. 14

FIG. 15A

FIG. 15